# EUROPÄISCHE PATENTSCHRIFT

(11) **EP 3 597 080 B1**
(45) Veröffentlichungstag und Bekanntmachung des Hinweises auf die Patenterteilung: **16.09.2020**
(21) Anmeldenummer: 18184030.7
(22) Anmeldetag: 17.07.2018
(51) Int. Cl.: A47J 27/16, A47J 27/04

(54) **VORRICHTUNG UND VERFAHREN ZUM AUFBEREITEN VON IN EINEM GEFÄSS AUFGENOMMENEN LEBENSMITTELN**
DEVICE AND METHOD FOR PREPARING FOOD STORED IN A VESSEL
DISPOSITIF ET PROCÉDÉ DE TRAITEMENT DES DENRÉES ALIMENTAIRES DISPOSÉS DANS UN RÉCIPIENT

(43) Veröffentlichungstag der Anmeldung: 22.01.2020
(73) Patentinhaber: Carogusto AG, 8580 Amriswil (CH)
(72) Erfinder: FISCHER, Daniel, 8590 Romanshorn (CH); SCHENK, Philipp, 0215 Schönenberg (CH)
(74) Vertreter: Patentanwälte Behrmann Wagner PartG mbB

(56) Entgegenhaltungen:
- DE-A1-102015 221 005
- US-A- 3 672 908
- US-A- 5 442 997
- US-A1- 2011 256 287

## Beschreibung

Die Erfindung betrifft eine Vorrichtung und ein Verfahren zum Aufbereiten von in einem Gefäß aufgenommenen Lebensmitteln, insbesondere von Fertiggerichten.

Die US 5,442,997 A offenbart eine automatisierte Garvorrichtung mit den Merkmalen des Oberbegriffs des Anspruch 1.

Aus der DE 10 2015 221 005 A1 ist eine Anlage zum Bereitstellen von Dampf bekannt, die eine Dampferzeugungseinheit zum Erzeugen von Dampf sowie eine mit der Dampferzeugungseinheit verbundene Dampfüberhitzungseinheit zum Überhitzen des in der Dampferzeugungseinheit erzeugten Dampfes offenbart. Die Anlage dient zum Aufbereiten von Lebensmitteln, die in einem dafür vorgesehenen Gefäß angeordnet sind.

Die US 2011/256287 A1 lehrt eine Vorrichtung und ein Verfahren zum Erwärmen eines Nahrungsmittels, das sich im Inneren eines Behälters befindet. Die Vorrichtung beinhaltet einen Dampferzeuger zur Dampferzeugung und einen Dampfaustrittsanschluss, der in Fluidverbindung mit dem Dampferzeuger steht. Der Dampf wird über die Austrittsöffnung in den Behälter eingeleitet. Die Vorrichtung weist eine Oberfläche auf, die es ermöglicht, den Behälterinnenraum in einer im Wesentlichen geschlossenen Umgebung in einen zumindest im Wesentlichen abgedichteten Zustand zu versetzen, wobei die Austrittsöffnung in Fluidverbindung mit dem Inneren des Behälters steht.

Die DE 10 2012 202 318 A1 offenbart eine Vorrichtung und ein Verfahren zur Zubereitung vorbereiteter Speisen. Hierzu umfasst die Vorrichtung eine Erwärmungsdüse in einer glockenartigen Abdeckung. Die Abdeckung überdeckt ein Gefäß, welches die Speise enthält. Zudem ist eine Reinigungsdüse offenbart, welche zur Reinigung, insbesondere der Abdeckung des Gefäßes mittels eines Spülmediums, wie Dampf und/oder Heißwasser, ausgebildet ist. Der hierzu verwendete Dampf und/oder das hierbei verwendete Heißwasser werden eigens für den Spülgang bereitgestellt. Es muss folglich eine energieintensive Erhitzung eines Spülmediums erfolgen.

Es ist daher eine Aufgabe der vorliegenden Erfindung eine Vorrichtung und ein Verfahren zum Aufbereiten von einem in einem Gefäß aufgenommenen Lebensmittel zu schaffen, welches eine einfache und ressourcenschonende Bereitstellung eines Spülmediums ermöglichen.

Diese Aufgabe wird durch eine Vorrichtung mit den in Anspruch 1 angegebenen Merkmalen und durch ein Verfahren mit den in Anspruch 11 angegebenen Merkmalen gelöst.

Der Kern der Erfindung besteht darin, dass die zur Erwärmung der Speise oder des Lebensmittels investierte Energie zumindest teilweise auch für einen Reinigungsvorgang verwendet werden kann. Des Weiteren wurde festgestellt, dass eine ressourcenschonende und verbesserte Reinigungswirkung dadurch erzielt werden kann, dass eine Reinigung nicht nur mit Heißwasser oder Heißdampf erfolgt sondern insbesondere mit einem Kondensat. Hierzu kann beispielsweise in einen Dampf ein kaltes Fluid, wie beispielsweise Wasser eingeleitet werden, was zu einer Kondensationsreaktion bzw. zu einem zumindest teilweisen Übergang des Dampfes von dem gasförmigen in den flüssigen Aggregatzustand führt. Es wurde festgestellt, dass ein solches Kondensat eine erheblich verbesserte Reinigungswirkung aufweist. Insbesondere ist vorteilhaft und mit verbesserter Reinigungswirkung einhergehend, dass eine Kondensationsreaktion bereits vor Einleitung in den Aufbereitungsraum, also vor der eigentlichen Reinigung, erfolgen kann.

Somit wird erfindungsgemäß eine Vorrichtung zum Aufbereiten von in einem Gefäß aufgenommenen Lebensmitteln, insbesondere von Fertiggerichten, vorgeschlagen, umfassend einen Aufbereitungsraum zur Aufnahme des Gefäßes, eine Dampferzeugungsanordnung zum Erzeugen von Dampf, umfassend zumindest einen ersten Dampfleitungspfad zur Leitung von Dampf und zumindest einen Kaltfluidleitungspfad zur Leitung von bezüglich des Dampfes kälterem Fluid, eine Dampfzuführeinheit mit mindestens einer Dampfabgabeöffnung in den Aufbereitungsraum, welche mit dem zumindest einen Dampfleitungspfad der Dampferzeugungsanordnung dampfleitend verbunden ist, eine Kondensatzuführeinheit mit mindestens einer Kondensatabgabeöffnung in den Aufbereitungsraum, welche mit dem Dampfleitungspfad der Dampferzeugungsanordnung und mit dem Kaltfluidleitungspfad verbunden ist, wobei die Vorrichtung ausgebildet ist zur Durchführung eines Aufbereitungsbetriebes, bei welchem das in dem Gefäß aufgenommene Lebensmittel mittels der Dampfzuführeinheit verzehrfertig aufbereitet werden kann, und zur Durchführung eines Spülbetriebs, bei welchem der Aufbereitungsraum mittels der Kondensatzuführeinheit gereinigt werden kann.

Mit der erfindungsgemäßen Vorrichtung ist es somit möglich in einem Aufbereitungsbetrieb unter Einsatz der hierfür nötigen Energie einen Dampf zu erzeugen, und ihn mittels des Dampfleitungspfades zu dem Aufbereitungsraum zu fördern. Nach einer Aufbereitung und ggf. auch nach einer Entnahme des Gefäßes oder des verzehrfertigen Lebensmittels kann das dampferzeugende Element, das beispielsweise ein Heizmittel umfasst, teilweise oder ganz deaktiviert werden. Es ist nämlich möglich, die Restwärme eines solchen Elements zu nutzen, um weiterhin Dampf mit einer geringeren Temperatur zu erzeugen, welcher jedoch für einen Spülbetrieb ausreichend ist. Dieser Restdampf ist vor Eintritt in den Aufbereitungsraum mit einem kalten Fluid vermischbar, was zu einer Kondensation führt. Das entstehende Spülkondensat bringt eine erheblich verbesserte Reinigungswirkung mit sich.

Die Bezeichnung "kälter" des Fluids bezieht sich relativ auf die Temperatur des Dampfes oder des Restdampfes und bezeichnet lediglich, dass die Fluidtemperatur geringer ist als die Restdampftemperatur.

Gemäß einer bevorzugten Ausführungsform der Vorrichtung nach der Erfindung sind die Dampfzuführeinheit und die Kondensatzuführeinheit entweder als separate Einheiten oder als eine einzige Einheit ausgebildet. Eine separate Ausbildung hat den Vorteil, dass unterschiedliche Abgaberichtungen gewählt werden können für den Aufbereitungsdampf im Aufbereitungsbetrieb und das Spülkondensat im Spülbetrieb. Dies kann ohne eine richtungseinstellbare Konstruktion erfolgen. Die Ausführung in einer Einheit kann notwendigen Bauraum reduzieren und beispielsweise mit einer manuell oder automatisch verstellbaren Einheit einhergehen.

Gemäß einer weiteren bevorzugten Ausführungsform der Vorrichtung nach der Erfindung umfasst die Dampferzeugungsanordnung zumindest eine mit dem ersten Dampfleitungspfad dampfleitend verbundene erste Dampferzeugungseinheit, welche derart ausgebildet ist, dass deren erstes Heizmittel im Aufbereitungsbetrieb aktiviert und im Spülbetrieb deaktiviert ist. Bei einer solchen Ausführung können im Spülbetrieb die Heizmittel komplett ohne zugeführte Energie auskommen, beispielsweise stromlos geschaltet sein. Aufgrund der noch in der Dampferzeugungseinheit vorhandenen Restwärme kann jedoch weiterhin Dampf erzeugt werden, der mit dem Kaltfluid zu dem Spülkondensat weiterverarbeitet wird. Diese Ausführungsform reduziert erheblich den notwendigen Energieeinsatz. Gemäß einer weiteren bevorzugten Ausführungsform umfasst die Vorrichtung nach der Erfindung einen zweiten Dampfleitungspfad, wobei die Dampferzeugungsanordnung eine mit dem ersten Dampfleitungspfad dampfleitend verbundene erste Dampferzeugungseinheit und eine mit dem zweiten Dampfleitungspfad dampfleitend verbundene zweite Dampferzeugungseinheit, vorzugsweise desweiteren eine mit dem ersten Dampfleitungspfad dampfleitend verbundene dritte Dampferzeugungseinheit und eine mit dem zweiten Dampfleitungspfad dampfleitend verbundene vierte Dampferzeugungseinheit umfasst. Mit anderen Worten sind zwei Dampfleitungspfade mit je zwei Dampferzeugungseinheiten vorgesehen. Die Dampferzeugungseinheiten entlang eines Dampfleitungspfades sind seriell anordenbar. Es ist denkbar, dass zumindest eine, vorzugsweise alle Dampferzeugungseinheiten derart ausgebildet sind, dass deren Heizmittel im Aufbereitungsbetrieb aktiviert und im Spülbetrieb deaktiviert sind. Mittels einer solchen Vorrichtung ist nicht nur eine sehr kurze Aufbereitungszeit realisierbar, sondern auch eine erhebliche Menge Restdampf durch mehrere, zwar deaktivierte, jedoch immer noch ausreichend heiße Heizmittel erzeugbar. Es ist zudem denkbar, dass die stromaufwärts gelegene Dampferzeugungseinheit jedes Dampfleitungspfades zum Erzeugen von Dampf aus Wasser ausgebildet sind und jede stromabwärts nachgelagerte Dampferzeugungseinheit eine Überhitzung des erzeugten Dampfes, beispielsweise auf 180°C, durchführen kann. Eine Erwärmung des Dampfes in den stromaufwärts gelegenen Dampferzeugungseinheiten jedes Dampfleitungspfades kann auf eine Temperatur von mindestens 150° C, insbesondere mindestens 170° C, insbesondere mindestens 190° C und insbesondere mindestens 200° C erfolgen. Der überhitzte Dampf aus den stromabwärts nachgelagerte Dampferzeugungseinheiten kann eine Temperatur zwischen 200° C und 300° C aufweisen. Der überhitzte Dampf kann zudem einen Wasseranteil zwischen 10 g bis 15 g bezogen auf 100 ml Prozesswasser aufweist, insbesondere von 11 g bis 14 g, insbesondere von 12 g bis 13 g. Die Verwendung von zwei Dampferzeugungseinheiten an zwei Dampfleitungspfaden führt zu einer vorteilhaften Wärmeübertragung an das Fluid und/oder den Dampf. Dadurch kann ein Lebensmittel beispielsweise in etwa 30 Sekunden verzehrfertig aufbereitet werden. Die Eingesetzte Menge an Fluid zur Aufbereitung kann zwischen 50 und 80ml liegen.

Es ist des Weiteren denkbar, dass die beiden Dampfleitungspfade als parallele Pfade ausgebildet sind und an jedem Dampfleitungspfad eine Pumpeneinheit und/oder eine Durchflusssensoreinheit angeordnet ist/sind. Hierdurch können unterschiedliche Durchflussmengen je Leitungspfad realisiert und erfasst werden.

Gemäß einer weiteren bevorzugten Ausführungsform nach der Erfindung umfasst die Vorrichtung eine erste Ventileinheit zum wahlweisen Freigeben entweder des zweiten Dampfleitungspfades oder des Kaltfluidleitungspfades, wobei die erste Ventileinheit stromaufwärts der Dampferzeugungsanordnung angeordnet ist. Somit ist der Kaltfluidleitungspfad als Bypass zum zweiten Dampfleitungspfad ausgebildet. Bei einer derartigen Ausführungsform wird Restdampf entlang des ersten Dampfleitungspfades gefördert während der zweite Dampfleitungspfad deaktiviert ist. Hierbei kann das im Aufbereitungsbetrieb zu dem zweiten Dampfleitungspfades beförderte Fluid umgelenkt werden, um ohne eine entsprechende Erhitzung entlang des Kaltfluidleitungspfades gefördert zu werden. Der Restdampf und das Kaltfluid reagieren zu dem Spülkondensat.

Gemäß einer weiteren bevorzugten Ausführungsform umfasst die erfindungsgemäße Vorrichtung eine zweite Ventileinheit zum wahlweisen Freigeben entweder eines Abschnittes eines den ersten und zweiten Dampfleitungspfad umfassenden gemeinsamen Dampfleitungspfades, der zu der Dampfzuführeinheit führt, oder eines Restdampfpfades, der von einem stromaufwärts der zweiten Ventileinheit angeordneten Abschnitt des gemeinsamen Dampfleitungspfades zu der Kondensatzuführeinheit führt, wobei die zweite Ventileinheit stromabwärts an der Dampferzeugungsanordnung angeordnet ist. Mittels der zweiten Ventileinheit ist in dem Aufbereitungsbetrieb der gesamte mit der Dampferzeugungsanordnung erzeugte Dampf zu dem Aufbereitungsraum über den gemeinsamen Dampfleitungspfad förderbar. Für den Spülbetrieb schaltet die zweite Ventileinheit um und gibt einen Restdampfpfad frei, welcher einen Restdampf fördert.

Alternativ zu der zweiten Ventileinheit können für den gemeinsamen Dampfleitungspfad und den Restdampfpfad jeweils separate Ventileinheiten vorgesehen sein. Daher umfasst eine weitere bevorzugte Ausführungsform der Vorrichtung nach der Erfindung eine zweite Ventileinheit und eine dritte Ventileinheit, wobei die zweite Ventileinheit zum wahlweisen Freigeben oder Versperren eines Abschnittes eines den ersten und zweiten Dampfleitungspfad umfassenden gemeinsamen Dampfleitungspfades, der zu der Dampfzuführeinheit führt, ausgebildet ist und die dritte Ventileinheit zum wahlweisen Freigeben oder versperren eines Restdampfpfades, der von einem Strom aufwärts der zweiten Ventileinheit angeordneten Abschnitt des gemeinsamen Dampfleitungspfades zu der Kondensatzuführeinheit führt, wobei die zweite Ventileinheit und die dritte Ventileinheit jeweils stromabwärts der Dampferzeugungsanordnung angeordnet sind. Durch Verwendung der zweiten Ventileinheit und der dritten Ventileinheit können die Dampfzuführeinheit und die Kondensatzuführeinheit gleichzeitig oder sich zumindest teilweise zeitlich überlappend bedient werden.

Ungeachtet der konkreten Ausführungsform können die Ventileinheiten beispielsweise als Magnetventile ausgeführt sein.

Gemäß einer weiteren bevorzugten Ausführungsform der Vorrichtung nach der Erfindung umfasst diese einen Kondensationsraum, in welchen der Kaltfluidleitungspfad sowie der Restdampfpfad führen und welcher leitend mit der Kondensatzuführeinheit verbunden ist. In vorteilhafter Weise können in diesem der Kondensatzuführeinheit stromaufwärts vorgelagerten Kondensationsraum das Kondensat zu der verbesserten Reinigung erzeugt werden.

Gemäß einer weiteren bevorzugten Ausführungsform ist zumindest eine/sind vorzugsweise alle Dampferzeugungseinheiten als Durchlauferhitzer ausgebildet. Ein Durchlauferhitzer weist ein bevorzugt elektrisches Heizelement auf und kann in kürzester Zeit eine Erhitzung vornehmen. Zudem benötigt ein solcher keinen nennenswerten zeitlichen Vorlauf und ist überdies in einfacher und sicherer Weise steuerbar.

Es wird zudem zur Lösung der o.g. Probleme ein Verfahren zum Betreiben einer Vorrichtung zum Aufbereiten von in einem Gefäß aufgenommenen Lebensmitteln vorgeschlagen, umfassend die folgenden Schritte:
- Durchführen in einem Aufbereitungsbetrieb eine Aufbereitung des Lebensmittels, umfassend:
- Einleiten über einen ersten Dampfleitungspfad und eine Dampfzuführeinheit einen Dampf in einen Aufbereitungsraum,
- Durchführen in einem Spülbetrieb eine Reinigung des Aufbereitungsraums, umfassend:
- Einleiten über einen ersten Dampfleitungspfad einen Restdampf und über einen Kaltfluidleitungspfad ein kaltes Fluid jeweils zu einer Kondensatzuführeinheit zur Erzeugung eines Spülkondensats in den Aufbereitungsraum.

Das erfindungsgemäße Verfahren weist im Wesentlichen die Vorteile der Vorrichtung auf, worauf hiermit verwiesen wird.

Es ist zudem denkbar, dass das Einleiten je Spülung mit einem Druck von 4 bar und/oder mit einer Menge von 200ml erfolgt.

In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

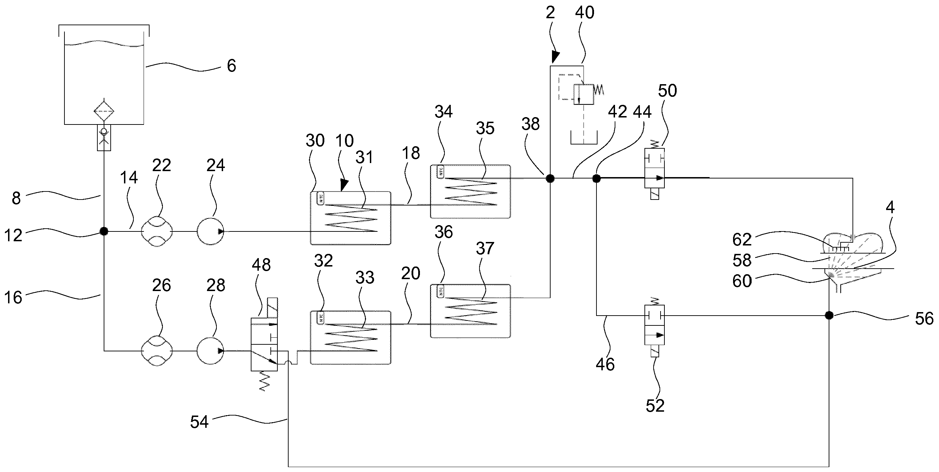

Weitere Vorteile, Merkmale und Einzelheiten der Erfindung ergeben sich aus der nachfolgenden Beschreibung einer bevorzugten Ausführungsform sowie anhand der Zeichnung. Diese zeigt in der einzigen Figur ein schematisches Blockschaltbild einer Vorrichtung zum Aufbereiten von in einem Gefäß zwei aufgenommenen Lebensmitteln.

Die in der einzigen Figur dargestellte Vorrichtung 2 dient zum Aufbereiten von Lebensmitteln, die in einem dafür vorgesehenen und nicht dargestellten Gefäß angeordnet sind. Die Vorrichtung 2 ist im Status des Aufbereitungsbetriebs abgebildet und umfasst einen Aufbereitungsraum 4 zur Aufnahme des Gefäßes. Der Aufnahmeraum 4 ist mittels eines Aufbereitungsdampfes zum Aufbereiten des Lebensmittels und mit einem Spülkondensat zur Spülung beaufschlagbar. "Raum" soll in diesem Kontext nicht als auf einem abgeschlossenen Raum beschränkend angesehen werden.

Die Vorrichtung 2 umfasst des Weiteren einen Wassertank 6, welcher beispielsweise drei bis vier Liter des als Wasser ausgeführten Fluids aufnimmt. Der Wassertank 6 speist über eine erste Wasserzulaufleitung 8 eine Dampferzeugungsanordnung 10 der Vorrichtung 2. Die Wasserzulaufleitung 8 trennt sich an einer Trennstelle 12 in eine Wasserzulaufleitung 14 und eine Wasserzulaufleitung 16 auf. In den Wasserzulaufleitungen 8, 12 und 14 kann beispielsweise ein Druck von 12bar vorherrschen Die Wasserzulaufleitung 14 speist einen ersten Dampfleitungspfad 18 und die Wasserzulaufleitung 16 speist einen zweiten Dampfleitungspfad 20. Die Wasserzulaufleitung 14 durchströmt hierzu zunächst eine Durchflusssensoreinheit 22 und eine Pumpeneinheit 24. Die Wasserzulaufleitung 16 durchströmt ebenfalls zunächst eine Durchflusssensoreinheit 26 und eine Pumpeneinheit 28 sowie zudem eine erste Ventileinheit 48. Die beiden Pumpeneinheiten 24 und 28 dienen dem Fördern von aus dem Wassertank 6 entnommenen Wasser in Richtung der beiden Dampfleitungspfade 18 und 20.

Entlang jedes Dampfleitungspfades 18 und 20 sind jeweils zwei Dampferzeugungseinheiten 30, 32, 34 und 36 seriell angeordnet. Die erste und Zweite Dampferzeugungseinheit 30, 32 definieren das Ende der jeweiligen Wasserzulaufleitung 14 und 16 und den Beginn des jeweiligen Dampfleitungspfades 18 und 20. Entlang des ersten Dampfleitungspfades 18 sind die erste Dampferzeugungseinheit 30 und die dritte Dampferzeugungseinheit 34 angeordnet. Entlang des zweiten Dampfleitungspfades sind die Dampferzeugungseinheit 32 und die vierte Dampferzeugungseinheit 36 angeordnet. Jede Dampferzeugungseinheit 30, 32, 34 und 36 umfasst einen Kesselbehälter mit zumindest einem innenliegend angeordneten Heizmittel 31, 33, 35 und 37 zum Erhitzen des Wassers, beispielsweise auf 200°C, und zum Erzeugen von (Wasser)Dampf. Die beiden parallel angeordneten Dampfleitungspfade 18 und 20 werden stromabwärts der Dampferzeugungsanordnung 10 an einer Verbindungsstelle 38 dampfleitend zusammengeführt. Dort befindet sich auch ein nicht näher beschriebenes Sicherheitsventil 40, welches beispielsweise im Fall des Erreichens eines kritischen Maximaldrucks Dampf aus der entsprechenden Dampferzeugungseinheit 30, 32, 34 und 36 oder dem entsprechenden Dampfleitungspfad 18 und 20 kontrolliert entweichen lässt, um Überdruck zu vermeiden.

Die einzelnen Dampferzeugungseinheiten 30, 32, 34 und 36 sind entlang ihres jeweiligen Dampfleitungspfades 18, 20 dampfleitend miteinander verbunden.

Der erste Dampfleitungspfad 18 und der zweiten Dampfleitungspfad 20 definieren ab der Verbindungsstelle 38 einen gemeinsamen Dampfleitungspfad 42. Von diesem gemeinsamen Dampfleitungspfad 42 geht stromabwärts der Verbindungsstelle 38 an einer Trennstelle 44 ein Restdampfpfad 46 ab. Im Aufbereitungsbetrieb kann der gemeinsame Dampfleitungspfad 42 den Dampf beiden Dampfleitungspfade 18 und 20 führen. Im Spülbetrieb kann der Restdampfpfad 46 einen Restdampf wenigstens einer der beiden Dampfleitungspfade 18 und 20 führen, wobei dieser einen Druck von 4bar haben kann.

Die Durchströmung des gemeinsamen Dampfleitungspfades 42 und des Restdampfpfades 46 ist steuerbar mittels einer zweiten Ventileinheit 50 und einer dritten Ventileinheit 52. Die zweite Ventileinheit 50, angeordnet stromabwärts der Trennstelle 44, dient zum wahlweisen Freigeben oder Versperren des gemeinsamen Dampfleitungspfades 42, der zu dem Aufbereitungsraum 4 führt. Die zweite Ventileinheit 50 ist in ihrer Freigabestellung dargestellt und gibt somit den gemeinsamen Dampfleitungspfade 42 dampfführbar frei. Die dritte Ventileinheit 52, angeordnet stromabwärts der Trennstelle 44, dient dem wahlweisen Freigeben oder Versperren des Restdampfpfades 46, der von der stromaufwärts der zweiten Ventileinheit angeordneten Trennstelle 44 des gemeinsamen Dampfleitungspfades 42 zu dem Aufbereitungsraum 4 führt. Die dritte Ventileinheit 52 ist in ihrer Sperrstellung dargestellt und versperrt somit den Restdampfpfad 46.

Von der Wasserzulaufleitung 16 zweigt ein Kaltfluidleitungspfad 54 ab, dessen Durchströmung mit Wasser aus dem Wassertank 6 von der ersten Ventileinheit 48 steuerbar ist. Der Kaltfluidleitungspfad 54 ist als Bypass zu dem zweiten Dampfleitungspfad 20 ausgebildet. Die erste Ventileinheit 48 ist in Ihrer die Wasserzulaufleitung 16 freigebenden Stellung dargestellt. Der Restdampfpfad 46 und der Kaltfluidleitungspfad 54 treffen in einem Kondensationsraum 56 zusammen. Durch das Vermischen von Restdampf mit kaltem Fluid bzw. Wasser entsteht ein Kondensat, welches im Folgenden als Spülkondensat 58 bezeichnet ist. Der Kondensationsraum 56 ist leitend mit einer Kondensatzuführeinheit 60 verbunden. Die Kondensatzuführeinheit 60 ist in dem Aufbereitungsraum 4 angeordnet und umfasst mindestens eine Kondensatabgabeöffnung. Die Kondensatzuführeinheit 60 dient dem Zuführen von Spülkondensat 58 in den Aufbereitungsraum 4.

Mit dem gemeinsamen Dampfleitungspfad 42 ist eine in dem Aufbereitungsraum 4 angeordnete Dampfzuführeinheit 62 dampfleitend verbunden, welche somit mit den beiden Dampfleitungspfaden 18 und 20 verbunden ist. Die Dampfzuführeinheit 62 dient dem Zuführen von Dampf in den Aufbereitungsraum 4, vorzugsweise in das Gefäß, zum Aufbereiten des Lebensmittels.

Die Dampfzuführeinheit 62 und die Kondensatzuführeinheit 60 sind als separate Einheiten ausgebildet.

Die Vorrichtung 2 weist eine nicht näher dargestellte, zentrale Steuereinheit auf, mittels der verschiedene Vorgänge zur Handhabung der Vorrichtung 2 steuerbar sind. Die Steuereinheit kann eine Eingabe- / Ausgabeeinheit in Form eines Berührbildschirms aufweisen. Der Bildschirm kann zum Darstellen von Verfahrensparametern, wie beispielsweise Temperatur und/oder Druck des zugeführten Dampfes ausgebildet sein. Über die Berührfunktion des Berührbildschirms können Steuerbefehle an die Eingabe- / Ausgabeeinheit 18 eingegeben werden. Insbesondere dient die zentrale Steuereinheit zur Steuerung und Durchführung eines Aufbereitungsbetriebs, bei welchem das in dem Gefäß aufgenommene Lebensmittel mittels der Dampfzuführeinheit 62 verzehrfertig aufbereitet wird, und zur Durchführung eines Spülbetriebs, bei dem der Aufbereitungsraum 4 mittels der Kondensatzuführeinheit 60 reinigbar ist.

Im Folgenden soll nun zunächst der Aufbereitungsbetrieb beschrieben werden. Eine geeignete Menge des in dem Wassertank 6 vorhandenen Wassers wird mittels eines getakteten Betriebs der Pumpeneinheiten 24 und 28 entlang der Wasserzulaufleitungen 8, 14 und 16 zu der Dampferzeugungsanordnung 10 geleitet. Hierzu ist für den zweiten Dampfleitungspfad 20 die erste Ventileinheit 48 stromlos geschaltet bzw. so eingestellt, dass sie eine Strömung des Wassers zu der zweiten Dampferzeugungseinheit 32 zulässt. Entlang jedes Dampfleitungspfades 18 und 20 erzeugen die Dampferzeugungseinheiten 30, 32, 34 und 36 aus dem Wasser einen in 38 zusammengeführten Dampf, der durch den gemeinsamen Dampfleitungspfad 42 in Richtung des Aufbereitungsraums 4 strömt. Hierzu öffnet die zweite Ventileinheit 50 den gemeinsamen Dampfleitungspfad 42 und verschließt die dritte Ventileinheit 52 den Restdampfpfad 46. Der zu dem Aufbereitungsraum 4 geförderte Dampf tritt durch die Dampfzuführeinheit 62 in den Aufbereitungsraum 4 hinaus. Das in einem dort angeordneten Gefäß aufgenommene Lebensmittel wird somit verzehrfertig aufbereitet.

Im Folgenden soll nun der Spülbetrieb näher erläutert werden. Eine geeignete Menge des in dem Wassertank 6 vorhandenen Wassers wird mittels eines getakteten und vorzugsweise Vollleistungsbetriebs der Pumpeneinheiten 24 und 28 entlang der Wasserzulaufleitungen 8, 14 und 16 geleitet. Durch den Vollleistungsbetrieb kann ein großer Druck aufgebaut werden, der zu einer guten Reinigungsleistung führt.

Da der Leitungsweg der Wasserzulaufleitung 14 zu der ersten Dampferzeugungseinheit 30 frei ist, gelangt Wasser in die erste Dampferzeugungseinheit 30 und somit in den ersten Dampfleitungspfad 18. Im gezeigten Beispiel sind im Spülbetrieb die Heizmittel 31, 33, 35 und 37 der Dampferzeugungseinheiten 30, 32, 34 und 36 deaktiviert. Von dem vorangegangenen Aufbereitungsbetrieb weisen diese jedoch noch eine zur Erzeugung eines Restdampfes ausreichende Hitze auf. Das aus der Wasserzulaufleitung 8 in die Wasserzulaufleitung 14 zu der ersten Dampferzeugungseinheit 30 strömende Wasser wird somit entlang des ersten Dampfleitungspfades 18 zu Restdampf erhitzt. Der Restdampf wird ab der Verbindungsstelle 38 in dem gemeinsamen Dampfleitungspfad 42 geführt, wobei der zweite Dampfleitungspfad 20 keinen Dampf bzw. Restdampf liefert, wie später beschrieben. Im Gegensatz zum vorangegangenen Aufbereitungsbetrieb ist nun die zweite Ventileinheit 50 in Ihre Sperrstellung verstellt (nicht gezeigt) und versperrt daher eine Restdampfleitung zu der Dampfzuführeinheit 62. Hingegen ist die dritte Ventileinheit 52 in Ihre Freigabestellung verstellt (nicht gezeigt) und gibt daher eine Restdampfleitung entlang des Restdampfpfades 46 zu der Kondensationszuführeinheit 60 frei.

Das aus der Wasserzulaufleitung 8 in die Wasserzulaufleitung 16 strömende Wasser erreicht die erste Ventileinheit 48, welche nun im Gegensatz zum vorangegangenen Aufbereitungsbetrieb die Wasserzulaufleitung 16 zu der zweiten Dampferzeugungseinheit 32 versperrt (Sperrstellung nicht gezeigt) und den bypassartigen Kaltfluidleitungspfad 54 frei gibt. Somit umströmt das durch die Wasserzulaufleitung 16 strömende Wasser die Dampferzeugungsanordnung 10 und erfährt hiervon keine Erwärmung. Das weiterhin kalte Wasser wird über den Kaltfluidleitungspfad 54 zu dem Kondensationsraum 56 geführt.

In dem Kondensationsraum 56 treffen das kalte Wasser aus dem Kaltfluidleitungspfad 54 und der Restdampf aus dem Restdampfpfad 46 zusammen. Durch den mitunter erheblichen Temperaturunterschied des kalten Wassers und des Restdampfes entsteht aus einer Kondensationsreaktion ein Spülkondensat 58. Der Kondensationsraum 56 ist leitend mit der Kondensationszuführeinheit 60 verbunden und leitet somit das entstandene Spülkondensat 58 in die Kondensationszuführeinheit 60 ein, welche es wiederum in den Aufbereitungsraum 4 zur Reinigung desselben austrägt.

### Bezugszeichenliste

- 2: Vorrichtung
- 4: Aufbereitungsraum
- 6: Wassertank
- 8: Wasserzulaufleitung
- 10: Dampferzeugungsanordnung
- 12: Trennstelle
- 14: Wasserzulaufleitung
- 16: Wasserzulaufleitung
- 18: erster Dampfleitungspfad
- 20: zweiter Dampfleitungspfad
- 22: Durchflusssensoreinheit
- 24: Pumpeneinheit
- 26: Durchflusssensoreinheit
- 28: Pumpeneinheit
- 30: erste Dampferzeugungseinheit
- 31: erstes Heizmittel
- 32: zweite Dampferzeugungseinheit
- 33: zweites Heizmittel
- 34: dritte Dampferzeugungseinheit
- 35: drittes Heizmittel
- 36: vierte Dampferzeugungseinheit
- 37: viertes Heizmittel
- 38: Verbindungsstelle
- 40: Sicherheitsventil
- 42: gemeinsamer Dampfleitungspfad
- 44: Trennstelle
- 46: Restdampfpfad
- 48: erste Ventileinheit
- 50: zweite Ventileinheit
- 52: dritte Ventileinheit
- 54: Kaltfluidleitungspfad
- 56: Kondensationsraum
- 58: Spülkondensat
- 60: Kondensationszuführeinheit
- 62: Dampfzuführeinheit

## Patentansprüche

1. Vorrichtung (2) zum Aufbereiten von in einem Gefäß aufgenommenen Lebensmitteln, insbesondere von Fertiggerichten, umfassend einen Aufbereitungsraum (4) zur Aufnahme des Gefäßes, eine Dampferzeugungsanordnung (10) zum Erzeugen von Dampf, umfassend
zumindest einen ersten Dampfleitungspfad (18) zur Leitung von Dampf und zumindest einen Kaltfluidleitungspfad (54) zur Leitung von bezüglich des Dampfes kälterem Fluid, eine Dampfzuführeinheit (62) mit mindestens einer Dampfabgabeöffnung in den Aufbereitungsraum (4), welche mit dem zumindest einen Dampfleitungspfad (18) der Dampferzeugungsanordnung (10) dampfleitend verbunden ist, eine Kondensatzuführeinheit (60) mit mindestens einer Kondensatabgabeöffnung in den Aufbereitungsraum (4), welche mit dem Dampfleitungspfad (18) der Dampferzeugungsanordnung (10) und mit dem Kaltfluidleitungspfad (54) verbunden ist,
**dadurch gekennzeichnet, dass**
die Vorrichtung (2) ausgebildet ist zur Durchführung eines Aufbereitungsbetriebs, bei welchem das in dem Gefäß aufgenommenen Lebensmittel mittels der Dampfzuführeinheit (62) verzehrfertig aufbereitet werden kann, und zur Durchführung eines Spülbetriebs, bei welchem der Aufbereitungsraum (4) mittels der Kondensatzuführeinheit (60) gereinigt werden kann.

2. Vorrichtung (2) nach Anspruch 1, **dadurch gekennzeichnet, dass** die Dampfzuführeinheit (62) und die Kondensatzuführeinheit (60) als separate Einheiten oder als eine einzige Einheit ausgebildet sind.

3. Vorrichtung (2) nach einem der vorangehenden Ansprüche, **dadurch gekennzeichnet, dass**
die Dampferzeugungsanordnung (10) zumindest eine mit dem ersten Dampfleitungspfad (18) dampfleitend verbundene erste Dampferzeugungseinheit (30) umfasst, welche derart ausgebildet ist, dass deren erstes Heizmittel (31) im Aufbereitungsbetrieb aktiviert und im Spülbetrieb deaktiviert ist.

4. Vorrichtung (2) nach einem der vorangehenden Ansprüche, **dadurch gekennzeichnet, dass** sie zudem folgendes umfasst:
einen zweiten Dampfleitungspfad (20), wobei die Dampferzeugungsanordnung (10) eine mit dem ersten Dampfleitungspfad (18) dampfleitend verbundene erste Dampferzeugungseinheit (30) und eine mit dem zweiten Dampfleitungspfad (20) dampfleitend verbundene zweite Dampferzeugungseinheit (32), vorzugsweise desweiteren eine mit dem ersten Dampfleitungspfad (18) dampfleitend verbundene dritte Dampferzeugungseinheit (34) und eine mit dem zweiten Dampfleitungspfad (20) dampfleitend verbundene vierte Dampferzeugungseinheit (36) umfasst.

5. Vorrichtung (2) nach Anspruch 4, **dadurch gekennzeichnet, dass** die beiden Dampfleitungspfade (18, 20) als parallele Pfade ausgebildet sind und an jedem Dampfleitungspfad (18, 20) eine Pumpeneinheit (24, 28) und/oder eine Durchflusssensoreinheit (22, 26) angeordnet ist/sind.

6. Vorrichtung (2) nach einem der vorangehenden Ansprüche, **dadurch gekennzeichnet, dass** sie zudem folgendes umfasst: eine erste Ventileinheit (48) zum wahlweisen Freigeben entweder des zweiten Dampfleitungspfades (20) oder des Kaltfluidleitungspfades (54), angeordnet stromaufwärts der Dampferzeugungsanordnung (10).

7. Vorrichtung (2) nach einem der vorangehenden Ansprüche, **dadurch gekennzeichnet, dass** sie zudem folgendes umfasst: eine zweite Ventileinheit (50) zum wahlweisen Freigeben entweder eines Abschnittes eines den ersten und zweiten Dampfleitungspfad (18, 20) umfassenden gemeinsamen Dampfleitungspfades (42), der zu der Dampfzuführeinheit (62) führt, oder eines Restdampfpfades (46), der von einem stromaufwärts der zweiten Ventileinheit (50) angeordneten Abschnitt des gemeinsamen Dampfleitungspfades (42) zu der Kondensatzuführeinheit (60) führt, angeordnet stromabwärts der Dampferzeugungsanordnung.

8. Vorrichtung (2) nach einem der Ansprüche 1 bis 6, **dadurch gekennzeichnet, dass** sie zudem folgendes umfasst:
eine zweite Ventileinheit (50) und eine dritte Ventileinheit (52), wobei die zweite Ventileinheit (50) zum wahlweisen Freigeben oder Versperren eines Abschnittes eines den ersten und zweiten Dampfleitungspfad (18, 20) umfassenden gemeinsamen Dampfleitungspfades (42), der zu der Dampfzuführeinheit (62) führt, ausgebildet ist, und die dritte Ventileinheit (52) zum wahlweisen Freigeben oder Versperren eines Restdampfpfades (46), der von einem stromaufwärts der zweiten Ventileinheit (50) angeordneten Abschnitt des gemeinsamen Dampfleitungspfades (42) zu der Kondensatzuführeinheit (60) führt, angeordnet stromabwärts der Dampferzeugungsanordnung (10), ausgebildet ist.

9. Vorrichtung (2) nach einem der vorangehenden Ansprüche, **dadurch gekennzeichnet, dass** sie zudem folgendes umfasst: einen Kondensationsraum (56), in welchen der Kaltfluidleitungspfad (54) sowie der Restdampfpfad (46) führen, und welcher leitend mit der Kondensatzuführeinheit (60) verbunden ist.

10. Vorrichtung (2) nach einem der vorangehenden Ansprüche, **dadurch gekennzeichnet, dass** zumindest eine, vorzugsweise alle Dampferzeugungseinheiten (30, 32, 34, 36) Durchlauferhitzer sind.

11. Verfahren zum Betreiben einer Vorrichtung zum Aufbereiten von in einem Gefäß (2) aufgenommenen Lebensmitteln, umfassend die folgenden Schritte:
- Durchführen in einem Aufbereitungsbetrieb eine Aufbereitung des Lebensmittels, umfassend:
- Einleiten über einen ersten Dampfleitungspfad (18) und eine Dampfzuführeinheit (62) einen Dampf in einen Aufbereitungsraum (4),
- Durchführen in einem Spülbetrieb eine Reinigung des Aufbereitungsraums (4), umfassend:
- Einleiten über einen ersten Dampfleitungspfad (18) einen Restdampf und über einen Kaltfluidleitungspfad (54) ein kaltes Fluid jeweils zu einer Kondensatzuführeinheit (60) zur Erzeugung eines Spülkondensats in den Aufbereitungsraum (4).

12. Verfahren nach Anspruch 11, **dadurch gekennzeichnet, dass** das Einleiten je Spülung mit einem Druck von 4 bar und/oder mit einer Menge von 200ml erfolgt.

## Claims

1. A device (2) for preparing foods received in a vessel, in particular ready meals, the device comprising a preparation chamber (4) for receiving the vessel, a steam generator assembly (10) for generating steam, comprising at least one first steam-conducting path (18) for conducting steam and at least one cold-fluid-conducting path (54) for conducting fluid which is colder than the steam, a steam delivery unit (62) having at least one steam discharge opening into the preparation chamber (4), said steam delivery unit (62) being connected to the at least one steam-conducting path (18) of the steam generator assembly (10) in a steam-conducting manner, a condensate delivery unit (60) having at least one condensate discharge opening into the preparation chamber (4), said condensate delivery unit (60) being connected to the steam-conducting path (18) of the steam generator assembly (10) and to the cold-fluid-conducting path (54)
**characterized in that**
the device (2) is designed to perform a preparation operation in which the food received in the vessel can be prepared by means of the steam delivery unit (62) so as to be ready to eat, and to perform a rinsing operation in which the preparation chamber (4) can be cleaned by means of the condensate delivery unit (60).

2. The device (2) according to claim 1, **characterized in that** the steam delivery unit (62) and the condensate delivery unit (60) are realized as separate units or as a single unit.

3. The device (2) according to any one of the preceding claims, **characterized in that** the steam generator assembly (10) comprises at least a first steam generator unit (30) which is connected to the first steam-conducting path (18) in a steam-conducting manner and which is realized in such a manner that its first heating means (31) is activated during the preparation operation and deactivated during the rinsing operation.

4. The device (2) according to any one of the preceding claims, **characterized in that** it also comprises:
a second steam-conducting path (20), the steam generator assembly (10) comprising a first steam generator unit (30) which is connected to the first steam-conducting path (18) in a steam-conducting manner and a second steam generator unit (32) which is connected to the second steam-conducting path (20) in a steam-conducting manner, preferably also a third steam generator unit (34) which is connected to the first steam-conducting path (18) in a steam-conducting manner and a fourth steam generator unit (36) which is connected to the second steam-conducting path (20) in a steam-conducting manner.

5. The device (2) according to claim 4, **characterized in that** the two steam-conducting paths (18, 20) are realized as parallel paths and that a pump unit (24, 28) and/or a flow sensor unit (22, 26) is/are disposed at each steam-conducting path (18, 20).

6. The device (2) according to any one of the preceding claims, **characterized in that** it also comprises: a first valve unit (48) disposed upstream of the steam generator assembly (10) for selectively releasing either the second steam-conducting path (20) or the cold-fluid-conducting path (54).

7. The device (2) according to any one of the preceding claims, **characterized in that** it also comprises: a second valve unit (50) for selectively releasing either a section of a common steam-conducting path (42) which comprises the first and the second steam-conducting path (18, 20) and which leads to the steam delivery unit (62), or a residual steam path (46) which leads from a section of the common steam-conducting path (42) disposed upstream of the second valve unit (50) to the condensate delivery unit (60) disposed downstream of the steam generator assembly.

8. The device (2) according to any one of claims 1 to 6, **characterized in that** it also comprises: a second valve unit (50) and a third valve unit (52), the second valve unit (50) being realized for selectively releasing or blocking a section of a common steam-conducting path (42) which comprises the first and the second steam-conducting path (18, 20) and which leads to the steam delivery unit (62), and the third valve unit (52) being realized for selectively releasing or blocking a residual steam path (46) which leads from a section of the common steam-conducting path (42) disposed upstream of the second valve unit (50) to the condensate delivery unit (60) disposed downstream of the steam generator assembly (10).

9. The device (2) according to any one of the preceding claims, **characterized in that** it also comprises: a condensation chamber (56) into which the cold-fluid-conducting path (54) and the residual steam path (46) lead and which is connected to the condensate delivery unit (60) in a conducting manner.

10. The device (2) according to any one of the preceding claims, **characterized in that** at least one, preferably all steam generator units (30, 32, 34, 36) are instantaneous water heaters.

11. A method for operating a device (2) for preparing foods received in a vessel, the method comprising the following steps:
- performing a preparation of the food in a preparation operation, comprising:
- supplying steam into a preparation chamber (4) via a first steam-conducting path (18) and a steam delivery unit (62),
- performing a cleaning of the preparation chamber (4) in a rinsing operation, comprising:
- supplying residual steam via a first steam-conducting path (18) and a cold fluid via a cold-fluid-conducting path (54) to a condensate delivery unit (60) in order to generate a rinsing condensate into the preparation chamber (4).

12. The method according to claim 11, **characterized in that** the supply is realized at a pressure of 4 bar and/or in a quantity of 200 ml per rinse.

## Revendications

1. Dispositif (2) de préparation de produits alimentaires, notamment de plats cuisinés, reçus dans un récipient, le dispositif (2) comprenant une chambre de préparation (4) destinée à recevoir le récipient, un système de génération de vapeur (10) destiné à générer de la vapeur et comprenant
au moins un premier trajet conducteur de vapeur (18) destiné à conduire de la vapeur et au moins un trajet conducteur de fluide froid (54) destiné à conduire un fluide plus froid par rapport à la vapeur, une unité d'alimentation en vapeur (62) ayant au moins une ouverture de distribution de vapeur (62) vers la chambre de préparation (4) et étant reliée à l'au moins un trajet conducteur de vapeur (18) du système de génération de vapeur (10) de manière à conduire de la vapeur, une unité d'alimentation en condensat (60) ayant au moins une ouverture de distribution de condensat vers la chambre de préparation (4) et étant reliée au trajet conducteur de vapeur (18) du système de génération de vapeur (10) et au trajet conducteur de fluide froid (54),
**caractérisé en ce que**
le dispositif (2) est réalisé pour effectuer une opération de préparation au cours de laquelle le produit alimentaire reçu dans le récipient peut être préparé au moyen de l'unité d'alimentation en vapeur (62) pour être prêt à consommer, et pour effectuer une opération de rinçage au cours de laquelle la chambre de préparation (4) peut être nettoyée au moyen de l'unité d'alimentation en condensat (60).

2. Dispositif (2) selon la revendication 1, **caractérisé en ce que** l'unité d'alimentation en vapeur (62) et l'unité d'alimentation en condensat (60) sont réalisées comme unités séparées ou comme une seule unité.

3. Dispositif (2) selon l'une quelconque des revendications précédentes, **caractérisé en ce que** le système de génération de vapeur (10) comprend au moins une première unité de génération de vapeur (30) qui est reliée au premier trajet conducteur de vapeur (18) de manière à conduire de la vapeur et qui est réalisée de telle manière que son premier moyen de chauffage (31) est activé pendant l'opération de préparation et désactivé pendant l'opération de rinçage.

4. Dispositif (2) selon l'une quelconque des revendications précédentes, **caractérisé en ce qu'**il comprend en outre :
un deuxième trajet conducteur de vapeur (20), le système de génération de vapeur (10) comprenant une première unité de génération de vapeur (30) qui est reliée au premier trajet conducteur de vapeur (18) de manière à conduire de la vapeur et une deuxième unité de génération de vapeur (32) qui est reliée au deuxième trajet conducteur de vapeur (20) de manière à conduire de la vapeur, de préférence en outre une troisième unité de génération de vapeur (34) qui est reliée au premier trajet conducteur de vapeur (18) de manière à conduire de la vapeur et une quatrième unité de génération de vapeur (36) qui est reliée au deuxième trajet conducteur de vapeur (20) de manière à conduire de la vapeur.

5. Dispositif (2) selon la revendication 4, **caractérisé en ce que** les deux trajets conducteurs de vapeur (18, 20) sont réalisés comme trajets parallèles et qu'une unité de pompe (24, 28) et/ou une unité de capteur de débit (22, 26) est/sont disposée(s) sur chaque trajet conducteur de vapeur (18, 20).

6. Dispositif (2) selon l'une quelconque des revendications précédentes, **caractérisé en ce qu'**il comprend en outre : une première unité de soupape (48) destinée à libérer au choix soit le deuxième trajet conducteur de vapeur (20) soit le trajet conducteur de fluide froid (54), l'unité de soupape (48) étant disposée en amont du système de génération de vapeur (10).

7. Dispositif (2) selon l'une quelconque des revendications précédentes, **caractérisé en ce qu'**il comprend en outre : une deuxième unité de soupape (50) destinée à libérer au choix soit une partie d'un trajet conducteur de vapeur (42) commun qui comprend le premier et le deuxième trajet conducteur de vapeur (18, 20) et qui s'étend vers l'unité d'alimentation en vapeur (62), soit un trajet de vapeur résiduelle (46) qui s'étend d'une partie du trajet conducteur de vapeur (42) commun disposée en amont de la deuxième unité de soupape (50) à l'unité d'alimentation en condensat (60) en aval du système de génération de vapeur.

8. Dispositif (2) selon l'une quelconque des revendications 1 à 6, **caractérisé en ce qu'**il comprend en outre : une deuxième unité de soupape (50) et une troisième unité de soupape (52), la deuxième unité de soupape (50) étant destinée à libérer ou bloquer au choix une partie d'un trajet conducteur de vapeur (42) commun qui comprend le premier et le deuxième trajet conducteur de vapeur (18, 20) et qui s'étend vers l'unité d'alimentation en vapeur (62), et la troisième unité de soupape (52) étant destinée à libérer ou bloquer au choix un trajet de vapeur résiduelle (46) qui s'étend d'une partie du trajet conducteur de vapeur (42) commun disposée en amont de la deuxième unité de soupape (50) à l'unité d'alimentation en condensat (60) en aval du système de génération de vapeur (10).

9. Dispositif (2) selon l'une quelconque des revendications précédentes, **caractérisé en ce qu'**il comprend en outre : une chambre de condensation dans laquelle le trajet conducteur de fluide froid (54) et le trajet de vapeur résiduelle (46) débouchent et qui est reliée à l'unité d'alimentation en condensat (60) de manière conductrice.

10. Dispositif (2) selon l'une quelconque des revendications précédentes, **caractérisé en ce qu'**au moins une, de préférences toutes les unités de génération de vapeur (30, 32, 34, 36) sont des chauffe-eaux instantanés.

11. Procédé de fonctionnement d'un dispositif de préparation de produits alimentaires reçus dans un récipient (2), le procédé comprenant les étapes suivantes :
- effectuer une préparation du produit alimentaire dans une opération de préparation, comprenant :
- introduire une vapeur dans une chambre de préparation (4) via un premier trajet conducteur de vapeur (18) et une unité d'alimentation en vapeur (62),
- effectuer un nettoyage de la chambre de préparation (4) dans une opération de rinçage, comprenant :
- introduire une vapeur résiduelle via un premier trajet conducteur de vapeur (18) et un fluide froid via un trajet conducteur de fluide froid (54) à une unité d'alimentation en condensat (60) dans la chambre de préparation (4) afin de générer un condensat de rinçage.

12. Procédé selon la revendication 11, **caractérisé en ce que** l'introduction par rinçage est réalisée à une pression de 4 bar et/ou à un volume de 200 ml.
